# EUROPÄISCHE PATENTSCHRIFT

(11) **EP 2 770 674 B1**
(45) Veröffentlichungstag und Bekanntmachung des Hinweises auf die Patenterteilung: **15.11.2017**
(21) Anmeldenummer: 14151877.9
(22) Anmeldetag: 21.01.2014
(51) Int. Cl.: H05B 37/02, H04L 12/28, H04L 12/40

(54) **Master-Busgerät für einen Gebäudeinstallationsbus und Verfahren zum Bereitstellen einer Spannungsversorgung an dem Gebäudeinstallationsbus**
Master bus device for a building installation bus and method for providing a voltage supply to the building installation bus
Appareil de bus maître pour un bus d'installation de bâtiment et procédé de mise à disposition d'une alimentation en tension au niveau du bus installation de bâtiment

(30) Priorität: 21.02.2013 DE 102013202877
(43) Veröffentlichungstag der Anmeldung: 27.08.2014
(73) Patentinhaber: Siemens Schweiz AG, 8047 Zürich (CH)
(72) Erfinder: Bodensteiner, Andreas, 92648 Vohenstrauß (DE); Schiekofer, Thomas, 93107 Wolkering (DE)
(74) Vertreter: Maier, Daniel Oliver

(56) Entgegenhaltungen:
- DE-A1-102011 080 500
- US-A1- 2003 036 807

## Beschreibung

Die Erfindung betrifft ein Master-Busgerät für eine Gebäudeautomatisierung. Das Master-Busgerät kann an einen Gebäudeinstallationsbus angeschlossen werden. Bei dem Gebäudeinstallationsbus handelt es sich bevorzugt um ein DALI (Digital Addressable Lighting Interface). Zu der Erfindung gehört auch ein Verfahren zum Betreiben einer Spannungsversorgung an einem Gebäudeinstallationsbus.
Bei bekannten Gebäudeinstallationsbussen, wie beispielsweise dem DALI, erfolgt die Spannungsversorgung der Kommunikationsschaltungen der Busteilnehmer über die Kommunikationsleitungen des Kommunikationsbusses selbst. Hierzu erzeugt eine Spannungsquelle zwischen den Kommunikationsleitungen eine Versorgungsspannung mit einem Spannungsniveau, das von den Busteilnehmern in der Kommunikation zugleich als High-Pegel interpretiert wird. Bei dem DALI kann dieses Spannungsniveau beispielsweise 16 Volt betragen. In der Regel ist die Spannungsquelle durch ein Master-Busgerät bereitgestellt, welches einen oder mehrere andere Busteilnehmer, die als Slave-Busgeräte bezeichnet werden, steuert. Bei den Slave-Busgeräten kann es sich beispielsweise um elektrische Vorschaltgeräte für Leuchtstoffröhren handeln. Um ausgehend von dem High-Pegel zwischen den Kommunikationsleitungen ein digitales Kommunikationssignal von einem Slave-Busgerät über die Kommunikationsleitungen an das Master-Busgerät zu übertragen, kann vorgesehen sein, dass das Slave-Busgerät die Kommunikationsleitungen zum Übertragen eines Bits des digitalen Kommunikationssignals für eine vorbestimmte Zeitdauer kurzschließt. Diese Zeitdauer ist hier als Sendezeiteinheit TE bezeichnet. Durch den Kurzschluss bricht die Versorgungsspannung zwischen den Kommunikationsleitungen zusammen, d.h. die übrigen Busteilnehmer, insbesondere das Master-Busgerät, detektieren an den Kommunikationsleitungen einen Low-Pegel. Die Bits "0" und "1" eines digitalen Kommunikationssignals werden so durch zwei unterschiedliche Signale repräsentiert, die hier als Low-Signal und High-Signal bezeichnet sind, wobei das High-Signal mit dem High-Pegel der Versorgungsspannung assoziiert wird, wie er von der Spannungsquelle erzeugt wird. Das andere Bit wird durch einen Low-Pegel repräsentiert, der betragsmäßig kleiner als der High-Pegel ist und der sich beim Kurzschluss zwischen den Kommunikationsleitungen ergibt.

Indem das Master-Busgerät mittels einer Empfangseinheit den Pegel der Versorgungsspannung an der Kommunikationsleitung überwacht, kann es das digitale Kommunikationssignal des Slave-Busgeräts empfangen.

Durch das Kurzschließen der Kommunikationsleitungen wird während der Zeit des Aussendens des Low-Signals auf den Kommunikationsleitungen ein entsprechender Kurzschlussstrom verursacht, so dass an einer Strombegrenzungsschaltung der Spannungsquelle eine hohe elektrische Leistung umgesetzt wird. Die Verlustleistung ist dabei durch den Spannungsabfall im Master-Busgerät bestimmt. Im Falle eines DALI-Bussystems mit einer nominellen Busspannung (High-Pegel) von UDALI = 16V kann dies beim Senden des Low-Signals z.B. zu einer Busspannung von USlave = 0,5V und damit im Master-Busgerät zu einem Spannungsabfall USpannungsabfallMaster = 15,5V führen. Die hierdurch verursachte Verlustleistung in der Spannungsquelle muss im Master-Busgerät bzw., wenn eine separate Spannungsversorgung für den Gebäudeinstallationsbus bereitgestellt ist, in dieser Spannungsversorgung thermisch abgeführt werden.

Aus der DE 10 2011 080 500 A1 ist eine Busversorgungsschaltung zur Spannungsversorgung eines digitalen Busses bekannt. Eine DC-Spannung wird zur Übermittlung eines Datenbits zumindest zeitweise kurzgeschlossen. Ein Verarbeitungsmittel ist dazu eingerichtet, den Kurzschluss durch Überwachung einer elektrischen Größe des Busses zu erkennen und dabei die Versorgungsspannung des Busses zumindest zu verringern, bis ein Ende des Kurzschlusses erkannt wird.

Der Erfindung liegt die Aufgabe zugrunde, eine effiziente Spannungsversorgung für einen Gebäudeinstallationsbus bereitzustellen.

Die Aufgabe wird durch ein Verfahren gemäß Patentanspruch 1 und ein Master-Busgerät gemäß Patentanspruch 9 gelöst. Vorteilhafte Weiterbildungen der Erfindung sind durch die Unteransprüche gegeben.

Das erfindungsgemäße Verfahren bildet eine Spannungsversorgung für einen Gebäudeinstallationsbus weiter, bei welchem über Kommunikationsleitungen des Kommunikationsbusses Busteilnehmer mit einer Versorgungsspannung versorgt werden und die Busteilnehmer bei einer Kommunikation ein Low-Signal jeweils durch Kurzschließen der Kommunikationsleitungen für eine vorbestimmte Sendezeiteinheit übertragen. Durch das erfindungsgemäße Verfahren wird eine Spannungsquelle der Spannungsversorgung davor geschützt, während des Kurzschlusses der Kommunikationsleitungen unnötig viel Verlustleistung umzusetzen. Hierzu ist die Spannungsquelle, mittels welcher die Versorgungsspannung an den Kommunikationsleitungen erzeugt wird, mit zumindest einer der Kommunikationsleitungen über ein steuerbares Schaltelement verbunden. Das heißt zumindest ein Pol der Spannungsquelle ist nicht unmittelbar mit einer der Kommunikationsleitungen verbunden, sondern über das Schaltelement.

Eine Überwachungseinrichtung, die Bestandteil der Spannungsversorgung ist, detektiert einen Übergang der Versorgungsspannung an den Kommunikationsleitungen von einem High-Pegel auf einen Low-Pegel (d.h. einen Kurzschluss). Nach Detektieren des Übergangs erzeugt die Überwachungseinrichtung ein erstes Schaltsignal zum Öffnen des Schaltelements. Hierdurch wird das Schaltelement in einen sperrenden Zustand geschaltet, und es kann kein Kurzschlussstrom von der Spannungsquelle in den Gebäudeinstallationsbus fließen. Damit entsteht in der Spannungsquelle auch keine Verlustleistung. Nach dem Öffnen des Schaltelements und nach einer vorbestimmten Ausschaltdauer erzeugt dann die Überwachungseinrichtung ein zweites Schaltsignal zum Schließen des Schaltelements. Hierdurch wird die Spannungsquelle dann wieder vollständig mit den Kommunikationsleitungen gekoppelt, so dass die Spannungsquelle wieder den High-Pegel zwischen den Kommunikationsleitungen aufbauen kann.

Das erfindungsgemäße Verfahren weist den Vorteil auf, dass die während des Sendens des Low-Signals in der Spannungsquelle umgesetzte maximale Verlustleistung reduziert wird, wodurch weniger Wärmeableitung notwendig ist, was wiederum eine kleinere Bauform der Spannungsquelle ermöglicht.

Die Spannungsversorgung ist erfindungsgemäß in ein Master-Busgerät für den Gebäudeinstallationsbus integriert.

In diesem Zusammenhang sieht das erfindungsgemäße Verfahren vor, dass durch die Überwachungseinrichtung kein spezielles eigenes Schaltsignal zum Öffnen des Schaltelements erzeugt wird. Stattdessen wird zum Öffnen des Schaltelements durch die Überwachungseinrichtung als das erste Schaltsignal ein Sendesignal zum Senden eines eigenen Low-Signals an eine Sendeeinheit des Master-Busgeräts übermittelt. Hierdurch ist in vorteilhafter Weise ermöglicht, auch diesen Teil der Überwachungseinrichtung durch bereits vorhandene Schaltungstechnik zu realisieren.

In diesem Fall ist bevorzugt vorgesehen, dass die Überwachungseinrichtung zumindest teilweise durch eine Empfangseinheit des Masterbusgeräts bereitgestellt wird, die auch die Kommunikationssignale empfängt und auswertet. Hierdurch ist es ohne zusätzlichen Schaltungsaufwand möglich, den Pegel der Versorgungsspannung an den Kommunikationsleitungen zu überwachen und hierdurch den Übergang vom High-Pegel auf den Low-Pegel zu detektieren.

Das ebenfalls zur Erfindung gehörende Master-Busgerät für den Gebäudeinstallationsbus ist genau in dieser Weise ausgestaltet. Es weist also eine Spannungsquelle für eine Spannungsversorgung des Gebäudeinstallationsbusses auf, die mit zumindest einer Kommunikationsleitung des Gebäudeinstallationsbusses über ein steuerbares Schaltelement verbunden ist. Das Master-Busgerät weist die beschriebene Empfangseinheit auf, die dazu ausgelegt ist, zum Empfangen eines Kommunikationssignals über die Kommunikationsleitung einen Pegel der Versorgungsspannung an der Kommunikationsleitung zu überwachen. Die Empfangseinheit des erfindungsgemäßen Master-Busgeräts ist nun zusätzlich dazu ausgelegt, bei Detektieren eines Übergangs der Versorgungsspannung von einem High-Pegel auf einen Low-Pegel das Schaltsignal zum Öffnen des Schaltelements zu erzeugen.

Das erfindungsgemäße Master-Busgerät wird derart weitergebildet, indem nicht die Empfangseinheit direkt, sondern eine Sendeeinheit des Master-Busgeräts mit dem steuerbaren Schaltelement der Spannungsquelle gekoppelt ist, wobei dann die Sendeeinheit dazu ausgelegt ist, beim Aussenden eines eigenen Low-Signals auch ein eigenes Schaltsignal zum Öffnen des Schaltelements der Spannungsquelle zu erzeugen. Erfindungsgemäß steuert dann die Empfangseinheit des Master-Busgeräts immer dann, wenn sie einen Low-Pegel auf dem Bus detektiert, nicht den Schalter für die Spannungsquelle direkt an, sondern sie steuert die Sendeeinheit an. Diese erzeugt dann selbst einen Kurzschluss und steuert dabei ihrerseits aber das Schaltelement zum Abschalten der Spannungsquelle an. Durch den "doppelten Kurzschluss" ergibt sich dann ein besonders gut für andere Geräte detektierbarer Low-Pegel.

Ein weiterer Vorteil ergibt sich, wenn nach dem Detektieren des Übergangs vom High-Pegel auf den Low-Pegel das erste Schaltsignal für das Schaltelement mit einer Schaltverzögerung verzögert erzeugt wird. Mit anderen Worten bleibt die Spannungsquelle zunächst für eine vorbestimmte Zeitdauer mit den Kommunikationsleitungen verbunden, nachdem der Kurzschluss detektiert wurde. Der Kurzschlussstrom wird dann erst nach der Schaltverzögerung unterbrochen. Hierdurch ergibt sich der Vorteil, dass andere Busteilnehmer ebenfalls den Übergang vom High-Pegel zum Low-Pegel zuverlässig erkennen können. Dies ist insbesondere dann vorteilhaft, wenn nicht das Master-Busgerät als Empfänger für das Kommunikationssignal gedacht ist.

Ein weiterer Vorteil ergibt sich, wenn zu einem Zeitpunkt nach dem Erzeugen des zweiten Schaltsignals (wenn also das Schaltelement die Spannungsquelle wieder elektrisch mit der Kommunikationsleitung verbindet) aber noch vor dem Ablaufen einer von der erwähnten Sendezeiteinheit TE abhängigen minimalen Sendezeitdauer T0min für das Low-Signal durch die Überwachungseinheit noch überprüft wird, ob immer noch der Low-Pegel an den Kommunikationsleitungen vorhanden ist. Hierdurch wird in vorteilhafter Weise auch eine Störung auf den Kommunikationsleitungen erkannt, durch welche sporadische Spannungseinbrüche (Wechsel vom High-Pegel zum Low-Pegel) verursacht werden.

Eine andere Weiterbildung des Verfahrens sieht vor, zu einem Zeitpunkt nach dem Erzeugen des zweiten Schaltsignals durch die Überwachungseinrichtung zu überprüfen, ob spätestens nach einer von der Sendezeiteinheit TE abhängigen maximalen Sendezeitdauer T0max wieder der High-Pegel an den Kommunikationsleitungen vorhanden ist. Hierdurch kann in vorteilhafter Weise ein fehlerhafter Kurzschluss erkannt werden, wie er beispielsweise durch eine Beschädigung der Kommunikationsleitungen verursacht werden kann.

Die Überwachung des Pegels der Versorgungsspannung zwischen den Kommunikationsleitungen kann in der Überwachungseinrichtung interruptgesteuert oder durch Abtasten erfolgen. Eine interruptgesteuerte Überwachung weist den Vorteil auf, dass nur dann tatsächlich eine Überprüfungsprozedur in der Überwachungseinrichtung durchgeführt werden muss, wenn die Interrupt-Schaltung einen Übergang detektiert und signalisiert hat. Das Abtasten weist den Vorteil auf, dass die Zeitpunkte, an welchen eine Überprüfung des Pegels stattfindet, gezielt festgelegt werden können, wodurch beispielsweise eine Robustheit gegenüber einem Rauschen auf den Kommunikationsleitungen erlangt werden kann.

Bei dem erfindungsgemäßen Master-Busgerät handelt es sich bevorzugt um ein DALI-Busgerät. Das Verfahren wird entsprechend bevorzugt im Zusammenhang mit DALI-Kommunikationsleitungen durchgeführt.

Zu der Erfindung gehören auch Weiterbildungen des erfindungsgemäßen Master-Busgeräts, welche Merkmale aufweisen, die bereits vorstehend im Zusammenhang mit den Weiterbildungen des erfindungsgemäßen Verfahrens beschrieben wurden. Aus diesem Grund sind die entsprechenden Weiterbildungen des erfindungsgemäßen Master-Busgeräts hier nicht noch einmal beschrieben.

Im Folgenden wird die Erfindung noch einmal anhand eines konkreten Ausführungsbeispiels erläutert. Es zeigen:
- FIG 1: eine schematische Darstellung eines Gebäudeinstallationsbusses,
- FIG 2: ein Diagramm mit Signalverläufen, wie sie sich bei einer Kommunikation von Busgeräten gemäß dem Stand der Technik ergeben, und
- FIG 3: ein Diagramm mit Signalverläufen zu einer Kommunikation, wie sie sich gemäß dem erfindungsgemäßen Verfahren ergeben.

Bei den Ausführungsbeispielen stellen die beschriebenen Komponenten der Ausführungsformen und die beschriebenen Schritte der Verfahren jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar. Die dargestellten Ausführungsbeispiele stellen hierbei bevorzugte Ausführungsformen der Erfindung dar.

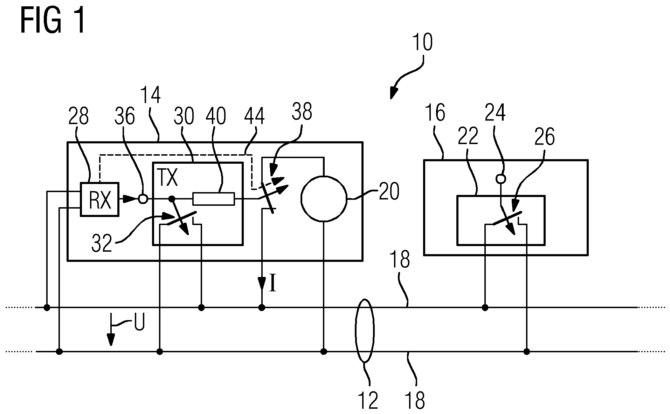

In FIG 1 ist ein Gebäudeautomatisierungssystem 10 mit einem Gebäudeinstallationsbus oder kurz Bus 12 gezeigt, an welchem ein Master-Busgerät oder kurz Busmaster 14 und ein Slave-Busgerät oder kurz Slavegerät 16 angeschlossen sein können. Neben dem Slavegerät 16 können noch weitere (hier nicht dargestellte) Slavegeräte an dem Bus 12 angeschlossen sein. Bei dem Gebäudeautomatisierungssystem 10 kann es sich beispielsweise um ein DALI-Bussystem handeln. Bei dem Busmaster 14 kann es sich beispielsweise um ein Steuergerät handeln, bei dem Slavegerät 16 beispielsweise um ein elektronisches Vorschaltgerät. Der Bus 12 weist zwei Kommunikationsleitungen 18 auf, zwischen denen eine Spannung U abfällt. Die Spannung U wird durch den Busmaster 14 bereitgestellt. Hierzu weist der Busmaster 14 eine Spannungsquelle 20 auf, bei der es sich um eine an sich aus dem Stand der Technik bekannte Schaltung für eine Spannungsversorgung handeln kann. Pole der Spannungsquelle 20 sind mit jeweils einer der Kommunikationsleitungen 18 verbunden.

Um digitale Daten beispielsweise von dem Slavegerät 16 zu dem Busmaster 14 übertragen zu können, weist das Slavegerät 16 eine Sendeeinheit 22 auf. Eine nicht weiter dargestellte Verarbeitungseinrichtung des Slavegeräts 16 erzeugt ein Kommunikationssignal an einem Dateneingang 24 der Sendeeinheit 22, wodurch die zu sendenden Daten an die Sendeeinheit 22 übergeben werden. Gemäß dem für die Kommunikation über den Bus 12 zugrunde gelegten Kommunikationsprotokoll, beispielsweise dem DALI-Protokoll, verändert die Sendeeinheit 22 die Spannung U zwischen den Kommunikationsleitungen 18, um hierdurch das digitale Kommunikationssignal zu übertragen. Ein vorbestimmter Bitwert, also entweder "0" oder "1", wird durch einen Low-Pegel der Spannung U den anderen Busteilnehmern, also etwa dem Busmaster 14, mitgeteilt. Hierzu weist die Sendeeinheit einen Kurzschlussschalter 26 auf, der in Abhängigkeit von den über den Dateneingang 24 empfangenen Daten geschlossen wird. Im geschlossenen Zustand sind die Kommunikationsleitungen 18 über den Kurzschlussschalter 26 geschlossen.

Zum Empfangen des digitalen Kommunikationssignals weist der Busmaster 14 eine Empfangseinheit 28 (RX-Receive) auf. Die Empfangseinheit 28 überwacht den Verlauf der Spannung U und erkennt eine Veränderung des Pegels, wie sie durch das Kurzschließen der Kommunikationsleitungen 18 hervorgerufen wird. Hierdurch kann die Empfangseinheit 28 von dem Slavegerät 16 und anderen Busgeräten ein digitales Kommunikationssignal empfangen. Auch der Busmaster 14 weist eine Sendeeinheit 30 (TX-Transmit) auf, welche ebenfalls einen Kurzschlussschalter 32 zum Erzeugen eines Kurzschlusses zwischen den Kommunikationsleitungen 18 für eine Datenübertragung aufweist.

Die Spannung U bildet auch eine Versorgungsspannung für Schaltungselemente der Slavegeräte wie dem Slavegerät 16. Sie kann beispielsweise einen Wert von 16 Volt aufweisen, wobei hier ein Toleranzbereich von beispielsweise +/- 2 Volt vorgesehen sein kann. Welche Pegel der Spannung U eingestellt werden müssen, ist dem jeweiligen Kommunikationsstandard zu entnehmen. Die Spannungsquelle 20 liefert einen Versorgungsstrom I, welcher im Ruhezustand, wenn keines der Slavegeräte 16 oder der Busmaster 14 ein Kommunikationssignal sendet, einen Stromstärkewert aufweist, der hier als Laststrom I0 bezeichnet ist. Während eines Kurzschlusses der Kommunikationsleitungen 18, wenn also beispielsweise der Kurzschlussschalter 26 geschlossen ist, fließt ein Kurzschlussstrom Ik mit der maximal möglichen Stromstärke. Während der Kurzschlussstrom Ik fließt, wird in der Spannungsquelle 20 eine verhältnismäßig hohe Verlustleistung umgesetzt, die z.B. durch Kühlung abgeführt werden muss.
Der Großteil der Verlustleistung wird dabei in einer (nicht näher dargestellten) Strombegrenzungsschaltung der Spannungsquelle 20 erzeugt.

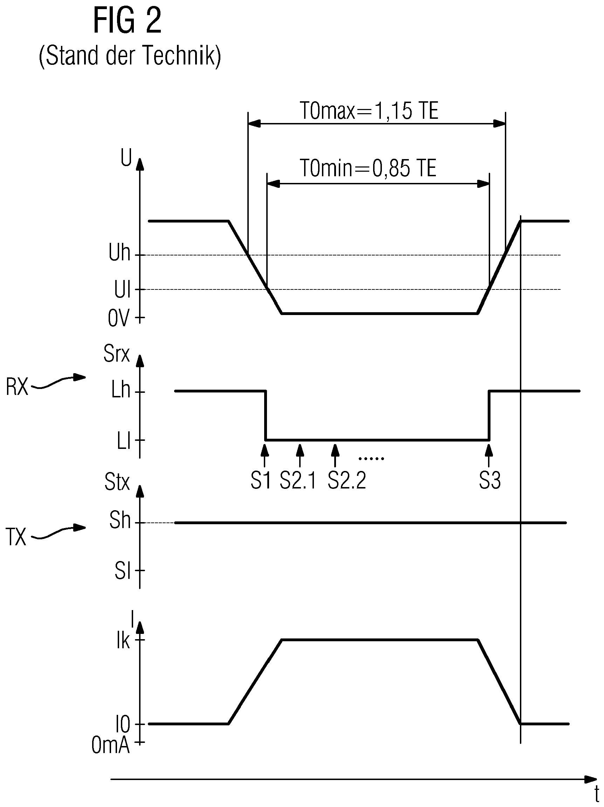

Um dieses Problem zu verdeutlichen, ist im Zusammenhang mit FIG 2 ein Kommunikationsvorgang beschrieben, wie er sich gemäß dem Stand der Technik ergeben kann. In FIG 2 ist jeweils über der Zeit t ein Verlauf der Spannung U, eines Empfangssignals Srx, wie es in der Empfangseinheit 28 nach einem Schwellwertvergleich vorliegen kann, eines Sendesignals Stx der Sendeeinheit 30, durch welches der Kurzschlussschalter 32 gesteuert wird, und des Versorgungsstroms I gezeigt. Die Verläufe können sich beispielsweise bei einer Kommunikation ergeben, während welcher das Slavegerät 16 mittels des Kurzschlussschalters 26 die Kommunikationsleitungen 28 zum Senden eines Low-Signals kurzschließt. Vor dem Schließen des Kurzschlussschalters 26 weist die Spannung U einen Pegel auf, der über einem Mindestpegel Uh liegt. Die Empfangseinheit 28 ordnet diesen gemessenen Spannungswert einem High-Pegel Lh zu. Dieser Vorgang ist an sich aus dem Stand der Technik beispielsweise im Zusammenhang mit DALI-Busgeräten bekannt. Die Sendeeinheit 30 ist während des Empfangs inaktiv, so dass das Sendesignal Stx den Inaktivpegel Sh aufweist, welcher bewirkt, dass der Kurzschlussschalter 32 geöffnet bleibt. Durch die Spannungsquelle 20 wird der Laststrom I0 erzeugt.

Bei unbelastetem Bus 12 ist die Spannung U also auf einem High-Wert. Es fließt der Laststrom I0, welcher der Stromaufnahme der angeschlossenen Busteilnehmer, beispielsweise der elektronischen Vorschaltgeräte, entspricht. Beim Senden eines Busteilnehmers, wie beispielsweise des Slavegeräts 16, wird durch den Kurzschluss der Kommunikationsleitungen 18 der Versorgungsstrom maximal, d.h. es fließt der Kurzschlussstrom Ik. Dieser kann durch das Mastergerät 14 beispielsweise auf einen Wert von Imax, beispielsweise 255 mA, begrenzt werden. Durch den Kurzschluss sinkt die Versorgungsspannung U auf einen Wert zwischen 0 Volt und Ul. Beim Absinken der Spannung U unter den Schwellwert Ul erkennt die Empfangseinheit 28, dass der Bus 12 einen Low-Pegel Ll aufweist. Um ein Bit vollständig zu übertragen, muss der Kurzschluss durch die Sendeeinheit 22 für eine vorbestimmte Sendezeiteinheit TE aufrecht erhalten werden. Durch zugelassene Toleranzen und durch die begrenzte Flankensteilheit des Spannungsverlaufs U liegt in dem vorliegenden Beispiel der Pegel der Spannung U für eine Zeitdauer T0max unterhalb des Schwellenwerts Uh und für eine Zeitdauer T0min unterhalb des Schwellenwerts Ul. Nach einer Zeit T0min kann der Kurzschluss durch die Sendeeinheit 22 wieder aufgehoben werden, indem der Kurzschlussschalter 26 geöffnet wird. Die Versorgungsspannung U steigt über den Schwellenwert Uh und der Versorgungsstrom I sinkt, so dass sich wieder der Laststrom I0 einstellt. Während des gesamten Sendevorgangs des Low-Signals fließt allerdings der Kurzschlussstrom Ik. Die entsprechende Sendeleistung im Kurzschlussfall wird in dem gezeigten Beispiel durch den Busmaster 14, und dort durch dessen Spannungsquelle 20 bereitgestellt. Im Falle einer separaten Spannungsversorgung des Gebäudeautomatisierungssystems 10 wird entsprechend die externe Spannungsquelle belastet. Die maximale Verlustleistung muss dann in dem Busmaster 14, und zwar an dessen Spannungsquelle 20, bzw. in der externen Spannungsversorgung thermisch abgeführt werden.

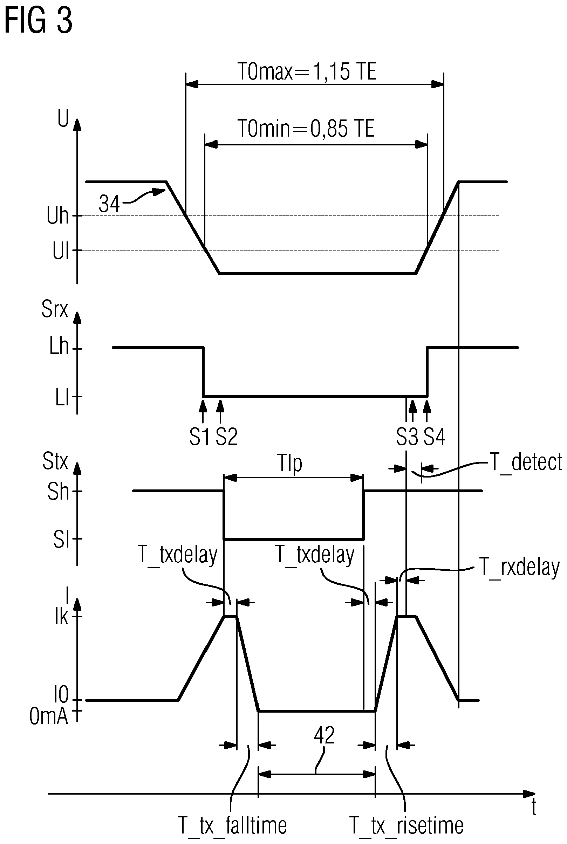

Bei dem Gebäudeautomatisierungssystem 10 ist dieses Problem signifikant verringert. Wie dies erreicht wird, ist im Folgenden anhand von FIG 1 und FIG 3 erläutert. Hierzu sind in FIG 3 zeitliche Verläufe der im Zusammenhang mit FIG 2 beschriebenen Größen dargestellt, wie sie sich in dem Gebäudeautomatisierungssystem 10 ergeben, in welchem der Busmaster 14 eine Ausführungsform des erfindungsgemäßen Verfahrens durchführt. Der Busmaster 14 ist entsprechend einer Ausführungsform des erfindungsgemäßen Master-Busgeräts.

Den Verläufen liegt wieder ein Sendevorgang eines Low-Signals durch das Slavegerät 16 zugrunde. Nach Erkennen einer fallenden Flanke 34 des Pegels der Spannung U durch die Empfangseinheit 28 zu einem Zeitpunkt S1 (dies kann durch einen Interrupt oder durch Abtasten in vorbestimmten Zeitabständen geschehen) wird zu einem Zeitpunkt S2 an einem Dateneingang 36 der Sendeeinheit 30 das Sendesignal Stx zum Steuern des Kurzschlussschalters 32 auf einen Aktivpegel Sl geschaltet, so dass die Sendeeinheit 30 dazu veranlasst wird, ebenfalls ein eigenes Low-Signal auszusenden. Hierzu wird der Kurzschlussschalter 32 geschlossen. Die Sendeeinheit 30 ist mit einem Schaltelement 38, beispielsweise einem Halbleiterschalter, gekoppelt, durch welchen ein Pol der Spannungsquelle 20 mit einer der Kommunikationsleitungen 18 verschaltet oder verbunden ist. Die Sendeeinheit 30 ist dazu ausgelegt, bei Erzeugen eines Kurzschlusses durch Schließen des Kurzschlussschalters 32 auch ein Unterbrechungssignal zum Öffnen des Schaltelements 38 auszusenden. Bei Empfangen des Unterbrechungssignals wechselt das Schaltelement 38 von einem elektrisch leitenden Zustand in einen elektrisch sperrenden Zustand, so dass der Versorgungsstrom I von der Spannungsquelle 20 zu den Kommunikationsleitungen 18 unterbrochen wird.

Durch Schließen des Kurzschlussschalters 32 zum Senden des Low-Signals wird mit einer Verzögerung von T_txdelay das Unterbrechungssignal von der Sendeeinheit 30 erzeugt und an das Schaltelement 38 übertragen. Hierdurch wird der Versorgungsstrom I unterbrochen. In FIG 1 ist die sich ergebende Verzögerung T_txdelay durch ein Verzögerungselement 40 symbolisiert. Die Verzögerung kann durch ein oder mehrere Bauelemente verursacht sein. Die Stromstärke fällt dann von dem Kurzschlussstrom Ik in einer Abfallzeit T_tx_falltime auf einen Wert von 0 A.

Nach einer Ausschaltdauer Tlp wird am Dateneingang 36 durch die Empfangseinheit 28 wieder ein Inaktiv-Signal Sh erzeugt, wodurch in der Sendeeinheit 30 zum einen das Öffnen des Kurzschlussschalters 32 und zum anderen das Erzeugen eines Schließsignals bewirkt wird, welches von der Sendeeinheit 30 an das Schaltelement 38 übertragen wird, welches in Abhängigkeit von dem Schließsignal in einen elektrisch leitenden Zustand geschaltet wird. Mit einer Verzögerung von T_txdelay wird hierdurch der Versorgungsstrom I wieder eingeschaltet. Der Versorgungsstrom I wird mit einer Verzögerung der Flankensteilheit T_tx_risetime wieder maximal, d.h. er wird zum Kurzschlussstrom Ik. Nachdem der Strom wieder maximal ist, wird kurz nachher (vorgegebenes Zeitintervall T_rxdelay) und noch innerhalb eines vorgegebenen Zeitintervalls T_detect, während welchem bei regulärem Betrieb noch mit einem Low-Pegel zu rechnen ist, zu einem Zeitpunkt S3 beispielsweise durch die Empfangseinheit 38 überprüft, ob tatsächlich noch das Empfangssignal Srx den Low-Pegel Ll aufweist. Zu einem nachfolgenden Zeitpunkt S4 wird beispielsweise durch einen Interrupt oder ein Sampling noch überprüft, ob die Gesamtzeitdauer des Low-Pegels Ll, wie sie durch die Empfangseinheit 28 beobachtet worden ist, zwischen einem minimalen Zeitdauerwert T0min und einem maximal zulässigen Zeitdauerwert T0max gelegen hat.

Wie der Verlauf des Versorgungsstroms I in FIG 3 zeigt, ergibt sich während des Kurzschlusses durch den Kurzschlussschalter 26 ein Zeitraum 42, während welchem die Versorgungsspannung 20 im Unterschied zum Stand der Technik (siehe FIG 2) nicht die Maximalleistung erbringen muss, sondern der Versorgungsstrom I unterbrochen ist.

Das Schließen des Kurzschlussschalters 32 ist nicht unbedingt notwendig. Das Öffnen des Schaltelements 38 ist ausreichend für die Funktion. Es kann deshalb auch vorgesehen sein, dass die Empfangseinheit 28 direkt mit dem Schaltelement 38 gekoppelt ist und die Empfangseinheit 28 direkt das Unterbrechungssignal und das Schließsignal für das Schaltelement 38 erzeugt. Hierzu kann dann eine Kopplung 44 zwischen der Empfangseinheit 28 und dem Schaltelement 38 vorgesehen sein, durch welche die Sendeeinheit 30 umgangen ist.

Das Beispiel zeigt, wie man beim Senden des Slavegeräts 16 gemäß der Erfindung die Leistungsaufnahme vom bisherigen Maximum während der Kurzschlussphase beim Senden eines Low-Signals für ein Bit auf ein Minimum reduziert. Dadurch wird die Leistungsaufnahme vom bisherigen Maximum während der gesamten Sendeperiode reduziert. Daraus ergibt sich, dass die maximale Verlustleistung im Busmaster 14 beim Senden eines Slavegeräts deutlich reduziert wird, wodurch weniger Wärmeableitung notwendig ist, was wiederum insgesamt eine kleinere Bauform insbesondere der Spannungsquelle 20 und auch des Busgeräts 14 insgesamt ermöglicht.

### Bezugszeichenliste

- 10: Gebäudeautomatisierungssystem
- 12: Bus
- 14: Busmaster
- 16: Slavegerät
- 18: Kommunikationsleitungen
- 20: Spannungsquelle
- 22: Sendeeinheit
- 24: Dateneingang
- 26: Kurzschlussschalter
- 28: Empfangseinheit
- 30: Sendeeinheit
- 32: Kurzschlussschalter
- 34: Flanke
- 36: Dateneingang
- 38: Schaltelement
- 40: Verzögerungselement
- 42: Zeitraum
- 44: direkte Kopplung
- I: Versorgungsstroms
- Ik: Kurzschlussstrom
- I0: Laststrom^
- Ll: Low-Pegel
- Lh: High-Pegel
- S1: Zeitpunkt
- S2: Zeitpunkt
- S3: Zeitpunkt
- S4: Zeitpunkt
- Sh: Inaktivpegel
- Sl: Aktivpegel
- Srx: Empfangssignals
- Stx: Sendesignal
- t: Zeit
- T_detect: Zeitintervall
- T_rxdelay: Zeitintervall
- T_tx_risetime: Flankensteilheit
- T_tx_falltime: Abfallzeit
- T_txdelay: Verzögerung
- T0min: minimaler Zeitdauerwert
- T0max: maximaler Zeitdauerwert
- TE: Sendezeiteinheit
- Tlp: Ausschaltdauer
- U: Spannung
- Uh: Schwellenwert
- Ul: Schwellenwert

## Patentansprüche

1. Verfahren zum Bereitstellen einer Spannungsversorgung an einem Gebäudeinstallationsbus (12), wobei über Kommunikationsleitungen (18) des Gebäudeinstallationsbusses (12) Busteilnehmer (16) mit einer Versorgungsspannung (U) versorgt werden und die Busteilnehmer (16) bei einer Kommunikation mit einer Sendeeinheit (22) ein Low-Signal jeweils durch Kurzschließen der Kommunikationsleitungen (18) für eine vorbestimmte Sendezeiteinheit (TE) übertragen, umfassend die Schritte:
- Bereitstellen der Versorgungsspannung (U) mittels einer Spannungsquelle (20), die mit einer der Kommunikationsleitungen (18) über ein steuerbares Schaltelement (38) verbunden ist, wobei die Spannungsquelle (20) in ein Master-Busgerät (14) integriert ist,
- Detektieren eines Übergangs der Versorgungsspannung (U) von einem High-Pegel (Lh) auf einen Low-Pegel (Ll) an den Kommunikationsleitungen (18) durch eine Überwachungseinrichtung (28), wobei die Überwachungseinrichtung (28) in das Master-Busgerät (14) integriert ist,
- Nach Detektieren des Übergangs, Erzeugen eines ersten Schaltsignals zum Öffnen des Schaltelements (38) durch die Überwachungseinrichtung (28), und nach einer vorbestimmten Ausschaltdauer (Tlp) nach dem Öffnen, Erzeugen eines zweiten Schaltsignals zum Schließen des Schaltelements (38) durch die Überwachungseinrichtung (28), **dadurch gekennzeichnet, dass**
zum Öffnen des Schaltelements (38) durch die Überwachungseinrichtung (28) als das erste Schaltsignal ein Sendesignal zum Senden eines eigenen Low-Signals an eine Sendeeinheit (30) des Master-Busgeräts (14) übermittelt wird, wobei die Sendeeinheit (30) in das Master-Busgerät (14) integriert ist und die Sendeeinheit (30) dann selbst einen Kurzschluss der Kommunikationsleitungen (18) erzeugt und dabei ihrerseits aber das Schaltelement (38) zum Abschalten der Spannungsquelle (20) ansteuert.

2. Verfahren nach Anspruch 1, wobei die Überwachungseinrichtung (28) zumindest teilweise durch eine Empfangseinheit (28) des Master-Busgeräts (14) bereitgestellt wird.

3. Verfahren nach einem der vorhergehenden Ansprüche, wobei nach dem Erzeugen des ersten Schaltsignals das Schaltelement (38) mit einer Schaltverzögerung (T_txdelay) verzögert in einen sperrenden Zustand geschaltet wird.

4. Verfahren nach einem der vorhergehenden Ansprüche, wobei zu einem Zeitpunkt (S3) nach dem Erzeugen des zweiten Schaltsignals und vor Ablaufen einer von der Sendezeiteinheit (TE) abhängigen minimalen Sendezeitdauer (T0min) durch die Überwachungseinheit (28) überprüft wird, ob immer noch der Low-Pegel (Ll) an den Kommunikationsleitungen (18) vorhanden ist.

5. Verfahren nach einem der vorhergehenden Ansprüche, wobei zu einem Zeitpunkt (S4) nach dem Erzeugen des zweiten Schaltsignals durch die Überwachungseinheit (28) überprüft wird, ob spätestens nach einer von der Sendezeiteinheit (TE) abhängigen maximalen Sendezeitdauer (T0max) wieder der High-Pegel (Lh) an den Kommunikationsleitungen (18) vorhanden ist.

6. Verfahren nach einem der vorhergehenden Ansprüche, wobei eine Überwachung eines Pegels der Versorgungsspannung (U) interruptgesteuert oder durch Abtasten erfolgt.

7. Verfahren nach einem der vorhergehenden Ansprüche, wobei der Gebäudeinstallationsbus (12) ein DALI-Bus ist und die Versorgungsspannung (U) an DALI-Kommunikationsleitungen (18) bereitgestellt wird.

8. Master-Busgerät (14) für einen Gebäudeinstallationsbus (12), wobei das Master-Busgerät (14) für eine Spannungsversorgung des Gebäudeinstallationsbusses (12) eine Spannungsquelle (20) aufweist, die mit zumindest einer Kommunikationsleitung (18) des Gebäudeinstallationsbusses (12) über ein steuerbares Schaltelement (38) des Master-Busgerätes (14) verbunden ist, und wobei das Master-Busgerät (14) eine Empfangseinheit (28) aufweist, die dazu ausgelegt ist, zum Empfangen eines Kommunikationssignals (Srx) über die Kommunikationsleitung (18) einen Pegel der Versorgungsspannung (U) an der Kommunikationsleitung (18) zu überwachen, wobei die Empfangseinheit (28) dazu ausgelegt ist, bei Detektieren eines Übergangs der Versorgungsspannung (U) von einem High-Pegel (Lh) auf einen Low-Pegel (Ll) ein erstes Schaltsignal zum Öffnen des Schaltelements (38) zu erzeugen,
**dadurch gekennzeichnet, dass**
das Master-Busgerät (14) eine Sendeeinheit (30) aufweist, wobei die Sendeeinheit (30) zum Aussenden eines Low-Signals die Kommunikationsleitungen (18) kurzschließt, wobei die Sendeeinheit (30) mit dem Schaltelement (38) gekoppelt ist und dazu ausgelegt ist, beim Aussenden eines Low-Signals auch ein Schaltsignal zum Öffnen des Schaltelements (38) zu erzeugen, und wobei die Empfangseinheit (28) dazu ausgelegt ist, als das erste Schaltsignal (Sl) ein Sendesignal (Sl) zum Senden eines Low-Signals an die Sendeeinheit (30) zu übertragen.

9. Master-Busgerät nach Anspruch 8, wobei der Gebäudeinstallationsbus (12) ein DALI-Bus ist und das Master-Busgerät (14) als ein DALI-Busgerät (14) ausgestaltet ist.

## Claims

1. Method for providing a voltage supply to a building installation bus (12), wherein bus subscribers (16) are supplied with a supply voltage (U) by way of communication lines (18) in the building installation bus (12) and when communicating with a transmit unit (22) the bus subscribers (16) transmit a low signal in each case by short-circuiting the communication lines (18) for a predetermined transmit time unit (TE), comprising the steps:
- providing the supply voltage (U) using a voltage source (20) which is connected to one of the communication lines (18) by way of a controllable switching element (38), wherein the voltage source (20) is integrated into a master bus device (14),
- detecting a changeover in the supply voltage (U) from a high level (Lh) to a low level (L1) on the communication lines (18) by means of an monitoring facility (28),
wherein the monitoring facility (28) is integrated into the master bus device (14),
- after detecting the changeover, generating a first switching signal for opening the switching element (38) by means of the monitoring facility (28), and
after a predetermined switch-off duration (Tlp) after the opening, generating a second switching signal for closing the switching element (38) by means of the monitoring facility (28),
**characterised in that**
in order to open the switching element (38) by means of the monitoring facility (28) as the first switching signal, a transmit signal for transmitting a separate low signal to a transmit unit (30) of the master bus device (14) is conveyed wherein the transmit unit (30) is integrated into the master bus device (14) and the transmit unit (30) then itself generates a short circuit in the communication lines (18) and in the process for its part however actuates the switching element (38) in order to switch off the voltage source (20).

2. Method according to claim 1, wherein the monitoring facility (28) is provided at least partially by a receive unit (28) of the master bus device (14).

3. Method according to one of the preceding claims, wherein after generating the first switching signal the switching element (38) is switched delayed with a switching delay (T_txdelay) into a blocking state.

4. Method according to one of the preceding claims, wherein a check is carried out by the monitoring unit (28) at a point in time (S3) after the generation of the second switching signal and before a minimal transmit duration (T0min) dependent on the transmit time unit (TE) has elapsed to determine whether the low level (L1) is still present on the communication lines (18).

5. Method according to one of the preceding claims, wherein a check is carried out at a point in time (S4) after generating the second switching signal by the monitoring unit (28) to determine whether at the latest after a maximum transmit duration (T0max) dependent on the transmit time unit (TE) the high level (Lh) is again present on the communication lines (18).

6. Method according to one of the preceding claims, wherein a monitoring of a level of the supply voltage (U) is carried out in an interrupt-driven manner or by means of scanning.

7. Method according to one of the preceding claims, wherein the building installation bus (12) is a DALI bus and the supply voltage (U) is provided on DALI communication lines (18).

8. Master bus device (14) for a building installation bus (12), wherein the master bus device (14) for a voltage supply of the building installation bus (12) has a voltage source (20) which is connected to at least one communication line (18) of the building installation bus (12) by way of a controllable switching element (38) of the master bus device (14), and wherein the master bus device (14) has a receive unit (28) which is designed to monitor a level of the supply voltage (U) on the communication line (18) in order to receive a communication signal (Srx) by way of the communication line (18), wherein when detecting a changeover of the supply voltage (U) from a high level (Lh) to a low level (L1) the receive unit (28) is designed to generate a first switching signal for opening the switching element (38),
**characterised in that**
the master bus device (14) has a transmit unit (30), wherein the transmit unit (30) for transmitting a low signal short circuits the communication lines (18), wherein the transmit unit (30) is coupled to the switching element (38) and is designed also to generate a switching signal for opening the switching element (38) when emitting a low signal and wherein the receive unit (28) is designed, as the first switching signal (S1), to transmit a transmit signal (S1) to transmit a low signal to the transmit unit (30).

9. Master bus device according to claim 8, wherein the building installation bus (12) is a DALI bus and the master bus device (14) is embodied as a DALI bus device (14).

## Revendications

1. Procédé destiné à la mise à disposition d'une alimentation en tension au niveau d'un bus d'installation de bâtiment (12), dans lequel par l'intermédiaire de lignes de communication (18) du bus d'installation de bâtiment (12) des utilisateurs de bus (16) sont alimentés avec une tension d'alimentation (U) et les utilisateurs de bus (16) lors d'une communication avec une unité d'émission (22) relayent respectivement un signal faible par le biais d'un court-circuit des lignes de communication (18) pour une unité de temps d'émission (TE), comprenant les étapes :
- de mise à disposition de la tension d'alimentation (U) au moyen d'une source de tension (20), qui est reliée à l'une des lignes de communication (18) par l'intermédiaire d'un élément de commutation pouvant être commandé (38), dans lequel la source de tension (20) est intégrée dans un appareil de bus maître (14),
- de détection d'une transition de la tension d'alimentation (U) d'un niveau élevé (Lh) à un niveau bas (Ll) au niveau des lignes de communication (18) par le biais d'un dispositif de surveillance (28), dans lequel le dispositif de surveillance (28) est intégré dans l'appareil de bus maître,
- de génération, après la détection de la transition, d'un premier signal de commutation pour l'ouverture de l'élément de commutation (38) par le biais du dispositif de surveillance (28), et
- de génération, après une durée de coupure prédéterminée (Tlp) après l'ouverture, d'un deuxième signal de commutation en vue de la fermeture de l'élément de commutation (38) par le biais du dispositif de surveillance (28),
**caractérisé en ce que**
pour l'ouverture de l'élément de commutation (38) par le biais du dispositif de surveillance (28) en tant que premier signal de commutation un signal d'émission destiné à émettre un faible signal qui lui est propre vers une unité d'émission (30) de l'appareil de bus maître (14) est transmis,
dans lequel l'unité d'émission (30) est intégrée dans l'appareil de bus maître (14) et l'unité d'émission (30) génère ensuite elle-même un court-circuit des lignes de communication (18) et pour sa part commande l'élément de commutation (38) en vue de la coupure de la source de tension (20).

2. Procédé selon la revendication 1, dans lequel le dispositif de surveillance (28) est mis à disposition au moins partiellement par le biais d'une unité de réception (28) de l'appareil de bus maître (14).

3. Procédé selon l'une des revendications précédentes, dans lequel après la génération du premier signal de commutation l'élément de commutation (38) est commuté dans un état bloquant et différé avec un retard de commutation (T_txdelay).

4. Procédé selon l'une des revendications précédentes, dans lequel à un moment (S3) après la génération du deuxième signal de commutation et avant l'écoulement d'une durée d'émission minimale (T0min) dépendante de l'unité de temps d'émission (TE) il est vérifié par le biais de l'unité de surveillance (28) si le niveau bas (Ll) est encore présent au niveau des lignes de communication (18).

5. Procédé selon l'une des revendications précédentes, dans lequel à un moment (S4) après la génération du deuxième signal de commutation il est vérifié par le biais de l'unité de surveillance (28) si au plus tard après une durée d'émission maximale (T0max) dépendante de l'unité de temps d'émission (TE) le niveau élevé (Lh) est de nouveau présent au niveau des lignes de communication (18).

6. Procédé selon l'une des revendications précédentes, dans lequel une surveillance d'un niveau de la tension d'alimentation (U) s'effectue avec une commande par interruption ou par un balayage.

7. Procédé selon l'une des revendications précédentes, dans lequel le bus d'installation de bâtiment (12) est un bus DALI et la tension d'alimentation (U) est mise à disposition au niveau de lignes de communication DALI (18).

8. Appareil de bus maître (14) pour un bus d'installation de bâtiment (12), dans lequel l'appareil de bus maître (14) présente pour une alimentation en tension du bus d'installation de bâtiment (12) une source de tension (20) qui est reliée à au moins une ligne de communication (18) du bus d'installation de bâtiment (12) par l'intermédiaire d'un élément de commutation pouvant être commandé (38) de l'appareil de bus maître (14), et dans lequel l'appareil de bus maître (14) présente une unité de réception (28), qui est adaptée pour, en vue de la réception d'un signal de communication (Srx) par l'intermédiaire de la ligne de communication (18), surveiller un niveau de la tension d'alimentation (U) au niveau de la ligne de communication (18), dans lequel l'unité de réception (28) est adaptée pour, lors de la détection d'une transition de la tension d'alimentation (U) d'un niveau élevé (Lh) à un niveau bas (Ll), générer un premier signal de commutation en vue de l'ouverture de l'élément de commutation (38),
**caractérisé en ce que**
l'appareil de bus maître (14) présente une unité d'émission (30), dans lequel l'unité d'émission (30) court-circuite les lignes de communication (18) en vue de l'émission d'un signal faible, dans lequel l'unité d'émission (30) est couplée à l'élément de commutation (38) et est adaptée pour, lors de l'émission d'un signal faible, générer également un signal de commutation en vue de l'ouverture de l'élément de commutation (38), et dans lequel l'unité de réception (28) est adaptée pour relayer, en tant que premier signal de commutation (S1), un signal d'émission (S1) en vue de l'émission d'un signal faible à l'unité d'émission (30).

9. Appareil de bus maître selon la revendication 8, dans lequel le bus d'installation de bâtiment (12) est un bus DALI et l'appareil de bus maître (14) est conçu en tant qu'appareil de bus DALI (14).
